# EUROPEAN PATENT APPLICATION

(11) **EP 1 801 483 A1**
(43) Date of publication of application: **27.06.2007**
(21) Application number: 05728850.8
(22) Date of filing: 04.04.2005
(51) Int. Cl.: F16L 33/22

(54) **SPACER AND STRUCTURE USING SAID SPACER FOR TIGHTENING HOSE AND JOINT**

(30) Priority: 29.09.2004 JP 2004313105; 22.11.2004 JP 2004336902; 25.01.2005 JP 2005000279 U; 27.01.2005 JP 2005000332 U
(71) Applicant: Aram Corporation, 3-10, Tenma 2-Chome, Kita-ku Osaka-shi, Osaka 5300043 (JP)
(72) Inventor: YOSHITOMI, Shingo, 5630017 (JP)
(74) Representative: Moore, Christopher Mark
(86) International application number: PCT/JP2005/006602
(87) International publication number: WO 2006/035526

(57) **Abstract**

The present invention is to provide a spacer in which a retaining portion of a product being conveyed is not generated even if the product being conveyed in a hose has high pressure or an inner pressure of the hose is high. The spacer of the present invention includes a cylindrical body. The cylindrical body is cut along a shortest line on an outer periphery surface of the cylindrical body which connects a point on an end of the cylindrical body with a point on the other end of the cylindrical body and which is not parallel to an axis of the cylindrical body. The cut cylindrical body interposed between a tightening means for tightening an outer periphery of the end of the hose and the end of the hose under a state that the end of the hose is put into a joint.

## Description

### TECHNICAL FIELD

The present invention relates to a hose joint, a spacer used for the hose joint, and a structure for tightening of a flexible hose made of resin and the hose joint with use of the spacer.

### BACKGROUND ART

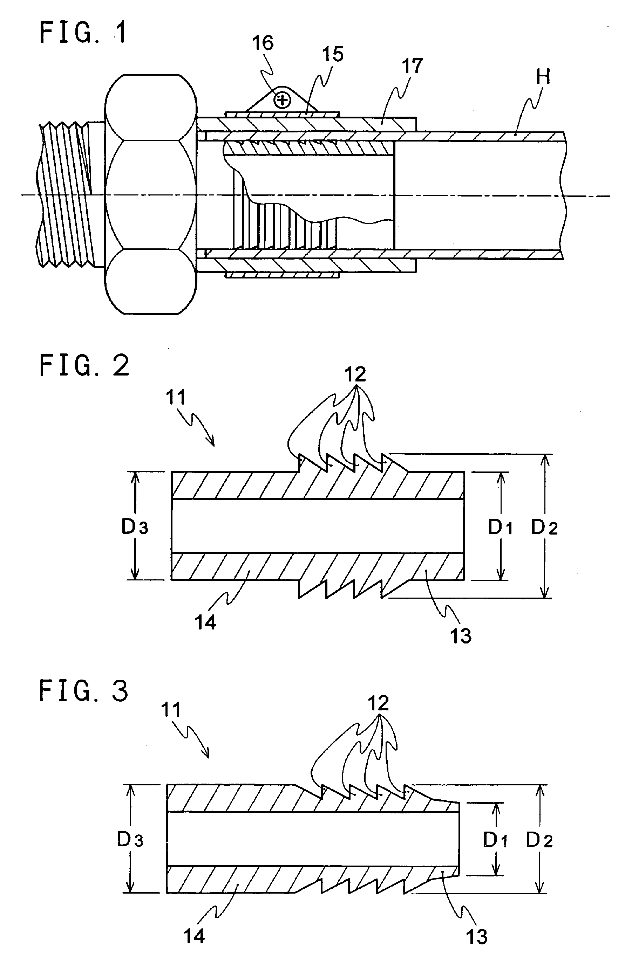

As shown in Figs. 1, 2 and 3, a hose joint 11 made of stainless pipe is disclosed for example in Japanese Unexamined Patent Publication No. 019382/ 1995, in which a sliding stopper portion 12 is provided on the hose joint 11 by forming a portion connected to a top end of a hose H into a shape of a cross section having a shape of saw blades by means of a cutting processing and a roll forming. Such hose joint 11 is inserted into the top end of the hose H made of synthetic resin, as shown in Fig. 1. Then, a screw 16 provided on a hose band 15 which is conventionally known is rotated with a screw driver or a wrench, so that the hose H is fastened to be engaged with the sliding stopper portion 12 of the hose joint 11 and the hose H is not liable to slip off the hose joint 11. As such conventional hose joint 11 shown in Fig. 2, there is one in which an external diameter D1 of the top end of the hose joint 11 and the external diameter D3 of a root portion 14 are equivalent, and an external diameter D2 of the sliding stopper portion 12 is represented by D2>D1=D3. There is the other one in which the external diameter D3 of the root portion 14 of the hose joint 11 and the external diameter D2 of the sliding stopper portion 12 are equivalent, and an external diameter D1 of the top end 13 of the hose joint 11 is represented by D1<D2=D3.

A hose band is disclosed for example in Japanese Unexamined Patent Publication No. 295757/2002. The hose band is for tightening an outer periphery of a pressed portion of a hose when the hose made of rubber or resin and the joint are connected and an inserting portion of the joint is pressed into the hose.

A connection between the hose made of resin and the joint with use of the hose band disclosed in Japanese Unexamined Patent Publication No. 295757/2002 is shown in Fig. 4. An inserting top end portion 21 of a joint 20 is tapered and a plurality of ribs 23 is formed in a tightening portion 22 adjacent to the top end. The joint is pressed into a hose 24 from the inserting top end 21 to the tightening portion 22, and then a hose band 25 is wrapped around a part outside of the tightening portion 22, and then a screw 26 of the hose band 25 is fastened to be fixed.

### DISCLOSURE OF INVENTION

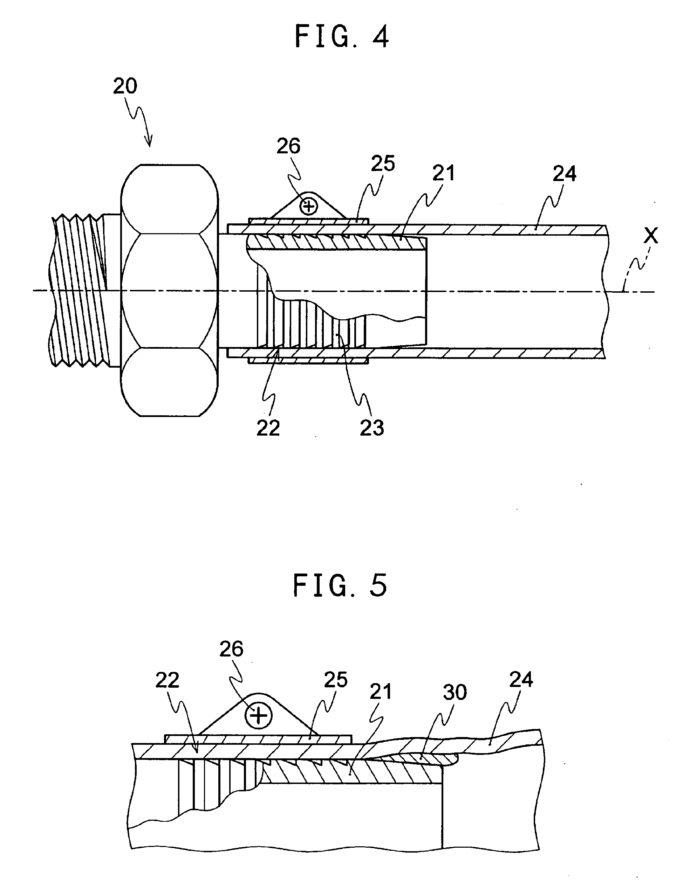

In a food processing factory, products being conveyed such as impasted meat with high viscosity or sauce are conveyed with the hose 24. However, in case that the hose H made of synthetic resin is connected to the hose joint 11 with the use of the hose joint 11 disclosed in Japanese Unexamined Patent Publication No. 019382/1995 and the hose band 15 disclosed in Japanese Unexamined Patent Publication No. 295757/2002, and then the hose joint 11 and the hose band 15 are applied in a piping system for conveying the impasted meat with high viscosity or the sauce used in the food processing factory, as the product being conveyed has the high temperature and the hose H expands. As a result, a clearance between the top end portion of the hose joint 11 and the hose H is generated, and then the product being conveyed flows in the clearance and gets spoiled. In other words, the hose 24 softens, and the product being conveyed has the high viscosity to be conveyed with a high pressure. Therefore, the hose 24 becomes expanded, and a retaining portion 30 of the product being conveyed is generated in the inserting top end 21 of the hose joint 20 and the hose 24 as shown in Fig. 5.

A residual product being conveyed which remains in the retaining portion 30 flows with a fresh product mixed with the residual product and the obtained food product is liable to get spoiled because of the mixed residual product to be conveyed. In this case, as all the food products produced at the same time become inferior products, he hose joint 20 and the hose 24 are frequently detached to wash an inside to prevent this situation.

To solve these problems, it is considered that the hose band 15 is fastened to evenly apply fastening force to the top end of the hose H made of synthetic resin after a tape 17 made of synthetic resin is wound around between the hose H made of synthetic resin and the hose band 15, so that the generation of the clearance can be prevented (see Fig. 1).

However, the hose H is made of synthetic resin. Therefore, when the hose H is fitted to the hose joint 11, the thickness of the hose H reduces as time passes and a play is generated between the tape 17 and the hose band 15. As a result, the tightening force of the hose H on the hose joint 11 reduces. Therefore, more tape is wound around on the tape 17 and then more tightening is necessary (tightened by the hose band 15 again). While more tightening is provided repeatedly, there is a problem that the inside face of the top end of the hose H is damaged by the sliding stopper portion having cross sections in the shape of saw blades.

Such a problem occurs not only in a case that the food product is conveyed with the hose 24 but also in a case that pharmaceutical or commercial oil are conveyed with the hose 24.

Thus, a purpose of the present invention is to provide a connecting structure of the hose joint 20 and the hose 24, a spacer used in the connecting structure, a tightening structure of the hose joint and the hose joint with low cost used in the tightening structure. In the connecting structure of the hose joint 20 and the hose 24, the retaining portion 30 of the product being conveyed in the hose 24 is not generated even if the product being conveyed has high temperature and an internal pressure of the hose becomes high. In the tightening structure of the hose joint, a clearance between the top end of the hose joint and the hose is not generated and more tightening is not necessary even if the hose expands. In the hose joint with low cost used in the tightening structure, an inside face of a top end of the hose is not damaged

A spacer of Embodiment 1 of the present invention includes a cylindrical body cut along a shortest line on an outer peripheral surface of the cylindrical body which connects one point in one end of the cylindrical body to one point in the other end and is not parallel with an axis of the cylindrical body.

The spacer of the Embodiment 2 of the present invention includes the cylindrical body cut into a direction excluding a radius direction in which the cylindrical body with reduced diameter can be obtained when the cut cylindrical body is pressed into the radius direction.

The Embodiment 3 of the present invention includes the spacer including the cylindrical body in which a groove extending in a determinate direction is cut through and two opposite end faces defined by the groove and a diameter of the spacer can be reduced.

The Embodiment 4 of the present invention includes a tightening structure of the hose interposed between the spacer and a hose joint composed of an upright pipe on which a plurality of grooves in circumferential shape is provided.

The Embodiment 5 of the present invention includes the hose joint used in the tightening structure according to Claim 11 or 12 in which a flange is provided on one end of the upright pipe and a plurality of the grooves in the circumferential shape is spaced apart between the one end of the upright pipe and a free end.

### BRIEF DESCRIPTION OF DRAWINGS

Fig. 1 is a partially cross sectional view showing a tightening structure of a hose of one Embodiment of the present invention.
Fig. 2 is a cross sectional explanatory view showing a structure of a conventional hose joint.
Fig. 3 is a cross sectional explanatory view showing the structure of the conventional hose joint.
Fig. 4 is a partially cross sectional view showing a tightening structure of a conventional hose.
Fig. 5 is a partially enlarged cross sectional view of Fig. 4.
Fig. 6 is a perspective view showing a spacer of one Embodiment of the present invention.
Fig. 7 is a cross sectional explanatory view showing an example of deformation of the spacer in Fig. 6.
Fig. 8 is an exploded explanatory view showing the spacer of the present invention.
Fig. 9 is an exploded explanatory view showing the spacer of the present invention.
Fig. 10 is a perspective view showing a state that the spacer of the present invention is not subjected to a load application.
Fig. 11 is a perspective view showing a state that the spacer of Fig. 10 is subjected to the load application and a cylindrical body can be obtained.
Fig. 12 is a perspective view showing the spacer of other Embodiment in the present invention.
Fig. 13 is an explanatory plan view showing the spacer of Fig. 12.
Fig. 14 is a perspective view showing the spacer of Fig. 12.
Fig. 15 is a perspective view showing the spacer of further other Embodiment in the present invention.
Fig. 16 is a cross sectional explanatory view showing the spacer of Fig. 15.
Fig. 17 is an explanatory plan view showing the spacer of Fig. 15.
Fig. 18 is an explanatory side view showing an example of the hose joint in the present invention.
Fig. 19 is a cross sectional explanatory view showing the tightening structure of the hose joint in the present invention.

### BEST MODE FOR CARRYING OUT THE INVENTION

The Embodiments of the present invention will be illustrated with reference to attached drawings.

### EMBODIMENT 1

Fig. 1 shows a state that a hose H and a joint are connected with a method of connecting a joint of the present invention. The joint is a straight joint made of metals such as bronze and stainless or hard resin.

The hose H made from materials such as crosslinking polyethylene is inserted into the joint with as it is. The hose H made from materials such as crosslinking polyethylene is also inserted into the joint after it is heated to soften.

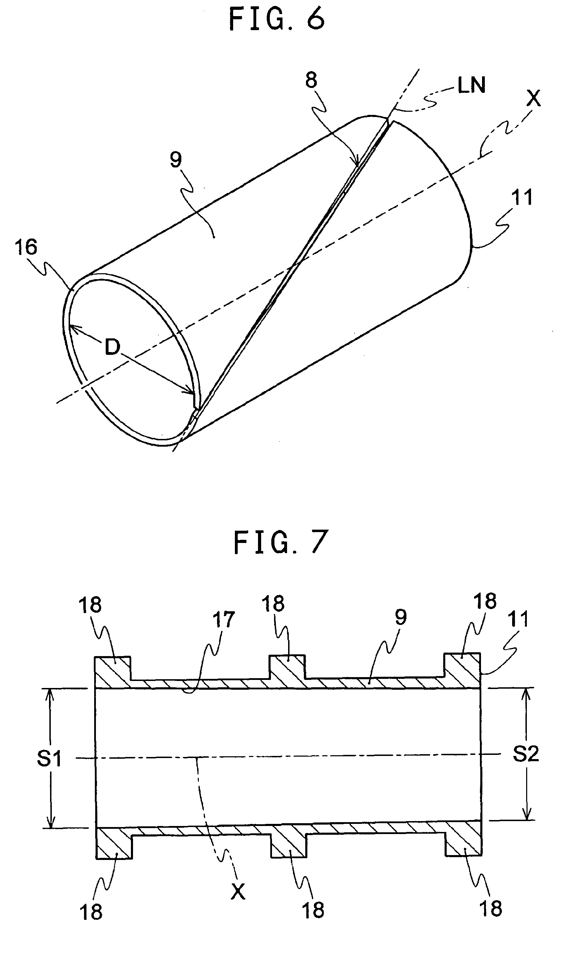

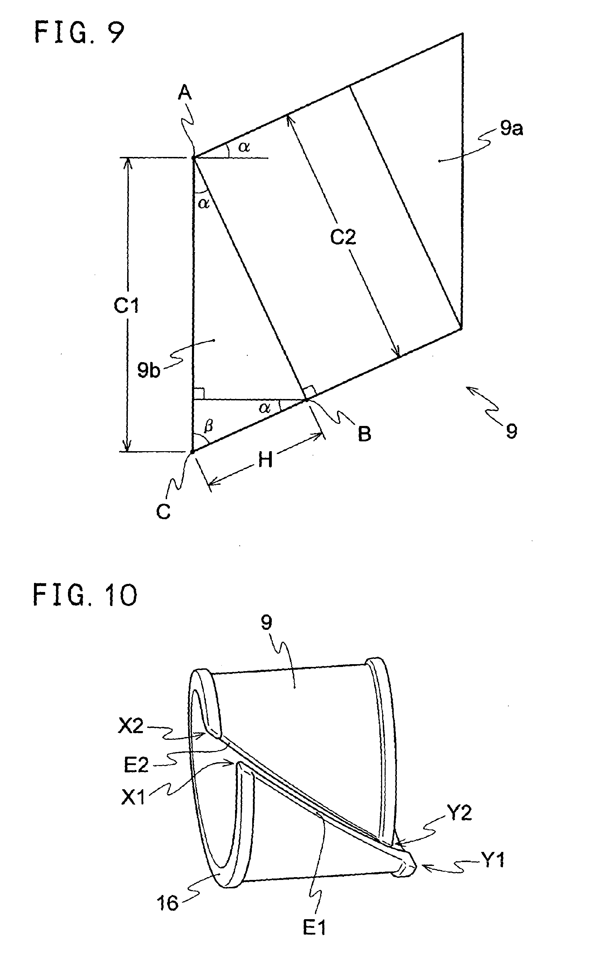

In Fig. 6, reference number 9 shows a cylindrical body. The cylindrical body 9 is cut along a shortest line LN on an outer peripheral surface of the cylindrical body 9 which connects one point in one end of the cylindrical body 9 to one point in the other end. The shortest line LN is not parallel with an axis of the cylindrical body. A groove 8 cut into the outer surface of the cylindrical body is formed by cutting into the cylindrical body 9 in accordance with the shortest line LN. The cylindrical body 9 functions as a spacer of which diameter can be reduced (reduced daimeter). The outer peripheral surface of the cylindrical body 9 is subjected to load application to a radial direction, so that the diameter is reduced while retaining cross-sectional form of round circle. More specifically, in the outer periphery of the cylindrical body 9 in Fig. 6, the groove 8 cut into the outer surface of the cylindrical body which is inclined sideways in relation to an axis X is formed on the outer periphery as shown in Fig. 6. By tightening the outer periphery, the diameter is reduced until the groove 8 cut into the outer surface of the cylindrical body is disappeared. When the outer periphery is further tightened, the diameter is further reduced because of the sliding of abutted surfaces of the groove 8 cut into the outer surface of the cylindrical body. A winding angle (angle α as shown in Fig. 9) of the groove 8 is preferably from 20° to 180°.

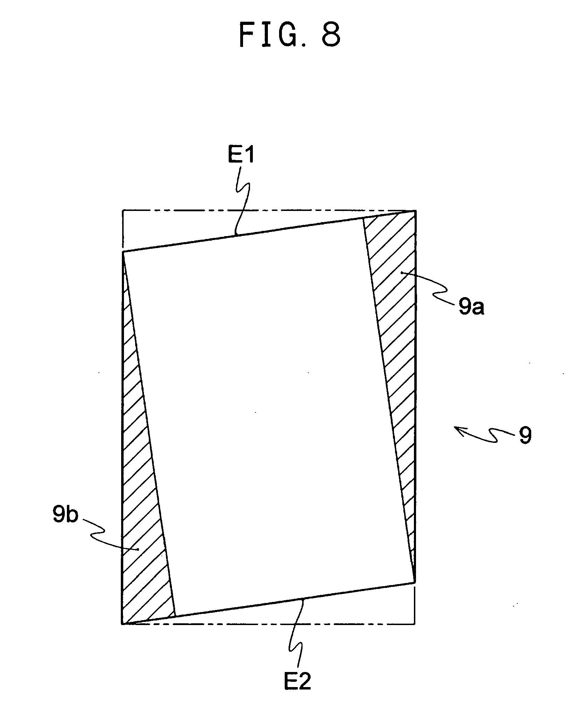

Referring to Figs. 6, 8 and 9, both ends in the cylindrical body 9 externally contact with the outer periphery surface of the cylindrical body 9. The cylindrical body 9 is cut along a spiral with predetermined pitch angle (α as shown in Fig. 9). Expanding the obtained cylindrical body 9 into a plane corresponds to excluding areas 9a and 9b from the cylindrical body 9 in Fig. 8. Edges E1 and E2 are formed in the cylindrical body 9 by the groove 8 cut into the cylindrical body. Thus, an internal diameter D is C1/π when the cylindrical body 9 is not subjected to the load application, as shown in Fig. 9. After excluding the area 9a and 9b from the cylindrical body 9, the cylindrical body is returned into a cylindrical shape again. Thereafter, tops A and B forms a round circle. A length of a line AB is C2. A distance between a top C before excluding the areas 9a and 9b and a top B after excluding the areas 9a and 9b is H. Therefore a relationship between C2 and C1 is represented by C2cosα + Hcosβ=C1

Therefore, an equation C2=(C1-Hcosβ)/cosα can be obtained. An internal diameter (C2/π) of the cylindrical body 9 after reduced diameter can be obtained from (C1-Hcosβ)/πcosα. If a desired internal diameter after the diameter is reduced is known , angle inclining angle α of the shortest line L which connects one point in one end of the cylindrical body 9 to one point in the other end and angle β formed by tops A, C and B are accordingly determined. Therefore, a perfect cylindrical can be obtained in a state that the diameter of the cylindrical body 9 is reduced, and a friction occurring between the cylindrical body and other members can be prevented.

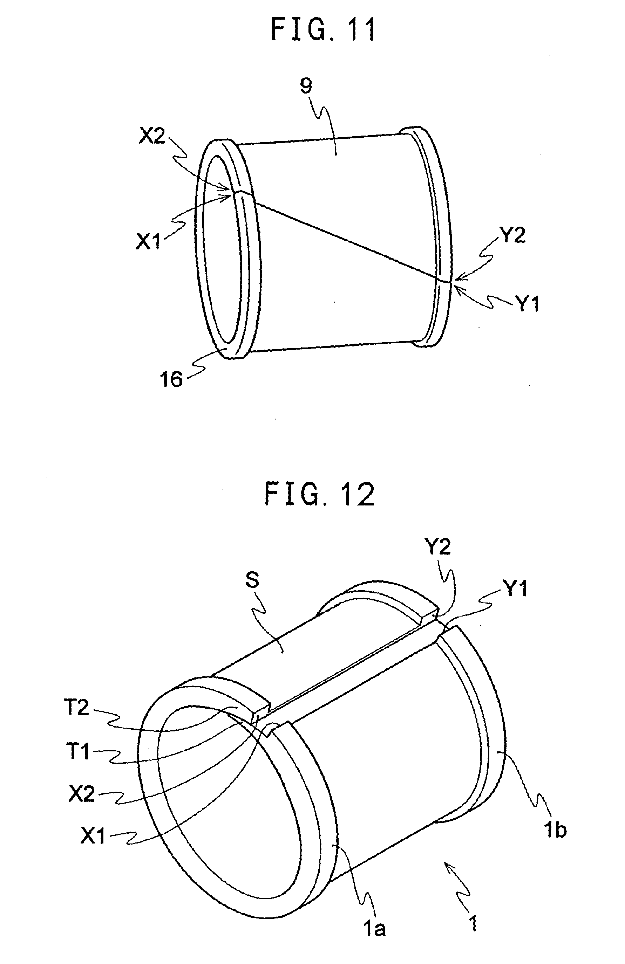

Figs. 10 and 11 are a perspective view showing a spacer 9 of the present invention, in which the area 9a and 9b are excluded from the cylindrical body 9 in Fig. 8.

When the spacer 9 is not subjected to load application, the cut surfaces E1 and E2 are spaced apart on both ends of the spacer 9, as shown in Fig. 10. Furthermore, end points X1 and X2, end points Y1 and Y2 are displaced.

When the outer periphery surface of the spacer 9 is subjected to load application in a radius direction, the cut surfaces E 1 and E2 are abutted. When the outer periphery surface of the spacer 9 is subjected to further load application in a radius direction, the diameter of the spacer 9 is reduced (reduced diameter), while the cut sections E1 and E2 slide each other, and the end points X1 and X2, the end points Y 1 and Y2 become closer each other. The outer periphery surface of the spacer 9 is subjected to more further load application in the radius direction, and the end points X1 and X2, and the end points Y 1 and Y2 agree with each other. Then, both end faces 16 of the spacer 9 form round circle and a perfect cylindrical body is obtained (See Fig. 11).

In this way, the spacer of the present invention is fitted on an end of a hose under the state where a portion of the cylindrical body is cut at the outer periphery surface and both ends of the original cylindrical body so that the spacer can be deformed. The hose is interposed between the spacer and a joint. Thereafter, the spacer is subjected to load application and deformed, and a perfect cylindrical body with reduced radius than the original cylindrical body can be obtained. As the last shape of the spacer 9 is cylindrical, the friction occurring between the spacer and other members can be preferably prevented. In a case that the friction between the spacer and other members does not occur, load may be additionally applied to the spacer after the cylindrical body can be obtained.

A material of the cylindrical body 9 may be metal, not limited to a particular material. However, synthetic resin having strength and elasticity such as polyamide resin, poly vinyl chloride, polyethylene, polypropylene, ABS resin and AES resin is preferably used from the viewpoint that an internal diameter of the cylindrical body 9 can be easily reduced and deformed.

In a case when a hose in which an inside of the hose can be seen through is used, even if a length of the cylindrical body 9 is shorter than the length of an inserting protrusion of the hose, the end face 11 of the cylindrical body 9 can be fixed, so that the end face 11 of the cylindrical body 9 furthermore protrudes to the side of the hose than an end face 10 of the inserting top end of the joint by positioning the end face 11 on the side of the hose of the cylindrical body 9 with the inside of the hose seen through.

Fig. 7 shows another Embodiment of the cylindrical body 9. The cylindrical body 9 is tapered in order that a thickness of the cylindrical body 9 becomes thin toward an end in the left side of Fig. 7. An internal diameter of an end in the left side of the cylindrical body 9 is S1, an internal diameter of an end in the right side of the cylindrical body 9 is S2. The S1 and S2 are represented by S1>S2.

Referring to Fig. 7, flanges 18 are provided on both ends in the left and right sides and a middle portion of the cylindrical body 9. The flanges 18 function for positioning a hose band 15 (see Fig. 1). The number of flange 18 may be 1, 2 or 4, not limited to 3.

By using such cylindrical body 9, the end on the side of the hose more strongly tightens the hose. Therefore, adhesiveness between an inserting top end of the joint and the hose is improved.

At first, the cylindrical body 9 and the hose band are fitted on the hose. Then, the hose is heated so as to insert the inserting portion of the joint into the hose, and the end face 16 of the cylindrical body 9 is pushed to the joint and moved into a position in where the hose band is wrapped around the cylindrical body 9. The screw 16 (see Fig. 1) is provided on the hose band 15 and the cylindrical body 9 to be fastened.

As the hose band 15, there are such as band type or linear type. Generally, one hose band 15 of band type is used to be fastened, but two or three hose bands 15 may be fastened in alignment.

Under the state where the joint and the hose H is connected in this way, even if a product being conveyed is heated to high temperature and under the high pressure to be conveyed into the hose H, a retaining place to retain the product being conveyed in connecting position between the joint and the hose H is not formed. Therefore, a frequency of disassembling the joint and the hose H to wash can be reduced.

### EMBODIMENT 2

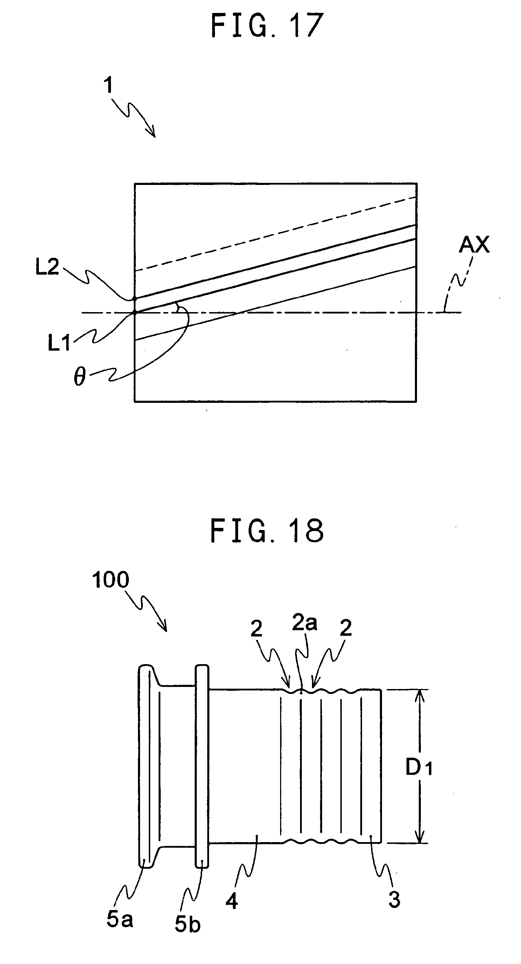

Referring to Fig. 18, the hose joint 100 of the present Embodiment includes a flange 5a for connecting with a piping system obtained by a cutting process and a flange 5b for engaging the hose and the spacer on one end of an upright pipe portion 4 obtained by cutting and processing a pipe made of stainless. Four grooves in circumferential shapes are provided with being spaced apart between the one end and the free end of the upright pipe 4 by means of the cutting process or the roll forming. Parts between these grooves 2 serve as a sliding stopper 2a of the hose H. The number of the grooves 2 is not limited to a particular number. A cross-sectional shape of the groove 2 is not limited to a particular shape, but a substantially semicircular shape is preferable from viewpoints of easiness of the cutting processing or the roll forming. The hose joint 100 of the present Embodiment has a structure in which a plurality of the grooves 2 is provided on the upright pipe 4. An external diameter D1 of the top end 3 of the hose 100 is equivalent with the external diameters of the sliding stopper 2a and a root portion.

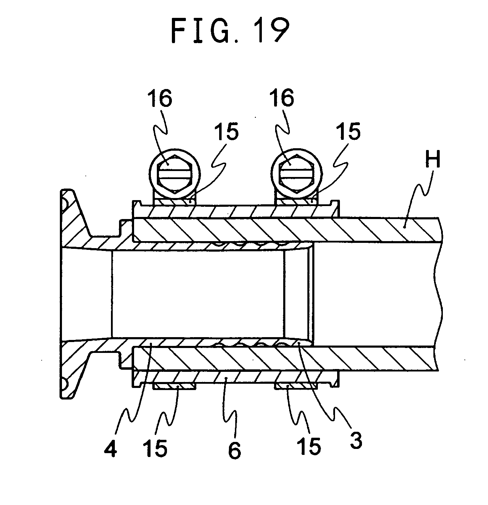

A structure for tightening the hose joint 100 of Fig. 18 is shown in Fig. 19. The spacer 6 used for a tightening structure shown in Fig. 19 can be obtained by spirally cutting both ends of the cylindrical body made of synthetic resin along the line on the outer periphery surface which connects one end of the cylindrical body to the other end and which is not parallel with the axis of the cylindrical body, as shown in Fig. 10.

### EMBODIMENT 3

Referring to Fig. 12, in the spacer 1 made of synthetic resin in the present Embodiment, the groove extending to an axis direction is defined by the end faces X1 and Y1 and a surface interposed between the end faces X1 and Y1, and the end faces X2 and Y2 and a surface interposed between the end faces X2 and Y2 (in other words, the spacer 1 of the present Embodiment is composed of the cylindrical body with two opposite end faces.) The distance between the two opposite end faces functions as interference in a case that the spacer is tightened by the hose band.

As shown in Fig. 12, a tapered portion T1 protrudes from the end faces X1 and Y1 and the surface interposed between the end faces X1 and Y1. A spacer without the tapered portion T1 is included in the present invention. A tapered portion T2 is formed in proximity of the end faces X2 and Y2 and the surface interposed between the end faces X2 and Y2.

Therefore, as the diameter of the spacer 1 in the present Embodiment is reduced with being subjected to load application in the radius direction, the inside face of the cylindrical body becomes perfectly cylindrical. When the end faces X1 and Y1 and the surface interposed between the end faces X1 and Y1, and the end faces X2 and Y2 and the surface interposed between the end faces X2 and Y2 are abutted, the tapered portion T1 is abutted with the inside face of the cylindrical body 1. As a result, ribs 1a and 1b form perfect circles.

Referring to Figs. 1 to 3, after a top end 3 of the hose H is inserted into a known hose joint to connect the hose H with the pipeline system, the spacer is put on the top end of the hose H. Then, the hose band 15 is wrapped around the spacer with the screw 16 rotated on the hose band 15 to be fastened. Then, the diameter of the spacer is reduced, so that the inside face of the cylindrical body becomes perfectly cylindrical, as previously mentioned. Therefore, the front surface of the top end of the hose H is tightened and the clearance between the top end of the hose joint and the hose is not generated and the hose H does not slip off from the hose joint. However, in the case that the known hose joint is used, the tightening force of the spacer by the present Embodiment on the hose H is large and there is the possibility that the inside face of the hose H is damaged by the plurality of sliding stoppers 12 having cross sections in the shape of saw blades.

The hose joint as shown in Fig. 18 is for preventing the inside face of the top end of the hose from being damaged by such as the plurality of the sliding stoppers having cross sections in the shape of saw blades. The hose is composed of the upright pipe 4 on which the plurality of the grooves 2 in the circumferential shape is provided. In the case of the hose joint, the sliding stopper 2a is defined between the groove 2a and the groove 2a. An external diameter of the sliding stopper 2a is equivalent with the external diameter of a portion between the sliding stopper 2a and the flange 5b of the upright pipe 4, and the external diameter of the top end 3. Therefore, as shown in Fig. 18, the hose H is inserted into the hose joint, and then the spacer 6 is put on the hose H. The hose band 15 is wrappeded around the spacer 6 with the screw 16 rotated on the hose band 15 to be fastened by means of a torque lench and the screw driver. As a result, the diameter of the spacer 6 is reduced, and the inside face of the cylindrical body becomes perfectly cylindrical. The whole front periphery surface of the top end of the hose H is fastened, and then the hose H entrers into the groove 2 of the hose joint without a clearance and then the hose H can be fitted into the hose joint. Therefore the clearance between the top end of the hose joint and the hose H is not generated and the hose H does not slip off from the hose joint. In the case that the hose joint in Fig. 18 is used, even if the tightening force of the spacer 6 in the present Embodiment on the hose H is large, the inside face of the hose H is not damaged by the sliding stoppers 12 of the hose joint.

### EMBODIMENT 4

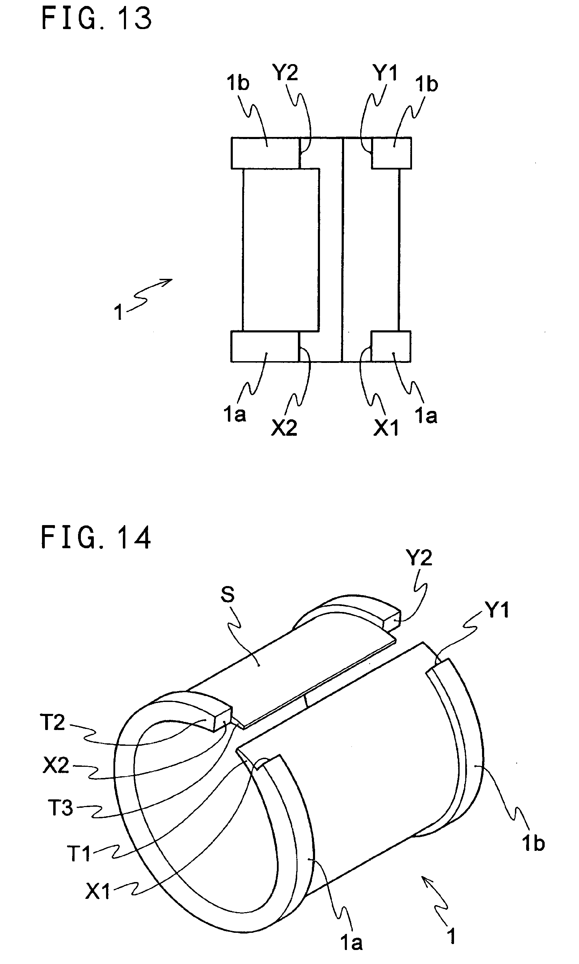

Referring to Figs. 13 and 14, the spacer 1 made of synthetic resin in the present Embodiment includes the groove extending to the axis direction of the cylindrical body. The groove is defined by the end faces X1 and Y1 and the surface interposed between the end faces X1 and Y1, and the end faces X2 and Y2 and the surface interposed between the end faces X2 and Y2. In the case of the spacer 1 of the present Embodiment, the distance between the two end faces X1 and X2 (or Y1 and Y2) functions as the clearance when the spacer is tightened by the hose band.

As shown in Fig. 14, the tapered portion T1 protrudes form the end faces X1 and Y1 and the surface interposed between the end faces X1 and Y1. A tapered portion T3 is formed in the proximity of the surface interposed between the end faces X2 and Y2. The tapered portion T2 is also formed in the proximity of the end faces X2 and Y2 of the ribs 1a and 1b.

Accordingly, the spacer 1 of the present Embodiment is subjected to the load application in the radius direction while reducing the diameter of the spacer. Then, the tapered portions T1 and T3 are overlapped so that the end faces X1 and Y1, the end faces X2 and Y2 become abutted, and the tapered portion T1 is abutted with the inner periphery surface of the cylindrical body 1. As a result, the inner face of the cylindrical body becomes perfectly circle as well as that the ribs 1 a and 1 b form the perfect cylindrical.

Referring to Fig. 1, in the case of the spacer in the present Embodiment as well as Embodiment 1, after the top end 3 of the hose H is inserted into the known hose joint 11, the spacer is put on the top end of the hose H. Then, the hose band 15 is wrapped around the spacer with screw 16 rotated on the hose band 15 to be fastened. In the case of the spacer in the present Embodiment, the tightening force of the spacer in the present Embodiment on the hose H is large, so that there is the possibility that the inside face of the hose H is damaged by the plurality of the sliding stoppers 12 having cross sections in the shape of saw blades.

In the present Embodiment, after the hose H is inserted into the hose joint as shown in Fig. 18, the spacer 6 is put on the hose H. Then, the hose band 15 is wrapped around the spacer 6 and the screw 16 may be provided on the hose band 15 to be rotated and fastened by means of the torque lench or the screw driver. In this case, the diameter of the spacer 6 is reduced and the inner surface of the cylindrical body becomes perfectly cylindrical. Therefore, the hose H enters into the groove 2 of the hose joint without the clearance, so that the hose H and the hose joint can be fitted into the hose joint. The clearance between the top end of the hose joint and the hose H is not generated, therefore the hose H does not slip off from the hose joint. As a result, the inside face of the hose H is not damaged by the sliding stoppers 2 of the hose joint.

### EMBODIMENT 5

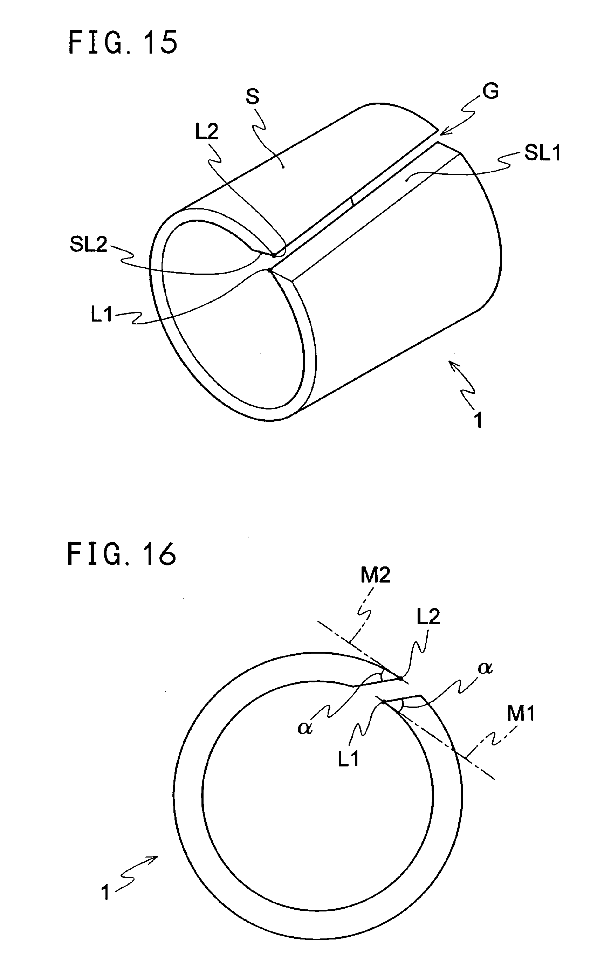

Referring to Figs, 15, 16 and 17, the spacer 1 made of synthetic resin in the present Embodiment is composed of the cylindrical body which is cut in the radius direction and a direction only inclined to (in other words, θ≠0 and θ≠90° in relation to the axis AX as shown in Fig. 17), excluding a direction parallel with the axis. When the cut cylindrical body is pressed into the radius direction, cut face SL1 and SL2 are abutted with each other, and then the groove G disappears, so that the cylindrical body with the reduced diameter can be obtained shown in Fig. 16. The cut face SL1 is inclined at angle of α to a tangent line M1 on a point L1 of an inner periphery circle of the spacer 1 and the cut face SL2 is inclined at the angle of α to a tangent line M2 on a point L2 of an outer periphery circle of the spacer 1.

The cut faces SL1 and SL2 of the spacer 1 in Fig. 16 are abutted, and then a load is applied to the spacer 1 in the radius direction, so that the diameter can be further reduced with the cut faces SL1 and SL2 abutted to slide and be deformed.

Referring to Fig. 1, in the case of the present Embodiment as well as the Embodiment 1, after the top end 3 of the hose H is inserted into the hose joint 11, the spacer is put on the top end of the hose H. The hose band 15 is further wrapped around and the screw 16 can be provided to be rotated and fastened. However, in the case of the spacer of the present Embodiment, as the tightening force on the hose H is large, there is the possibility that the inside face of the hose H is damaged by the plurality of the sliding stoppers 12 having cross sections in the shape of saw blades.

In the case of the present Embodiment, after the hose H is inserted into the hose joint 100 as shown in Fig. 18, the spacer 6 is put on the hose H. The hose band 15 is wrapped around the spacer 6 so that the screw 16 may be provided to be rotated and fastened by means of the torque lench and the screw driver. In this case, the diameter of the spacer is reduced, and then the inner face of the cylindrical body perfectly cylindrical. Therefore, the hose H enters into the groove 2 of the hose joint without the clearance, so that the hose H can be fitted into the hose joint. As a result, the clearance between the top end of the hose joint and the hose H is not generated, and then the inside face of the hose H is not damaged by the sliding stoppers 2 of the hose joint.

### INDUSTRIAL APPLICABILITY

A spacer of the present invention includes a cylindrical body cut along a shortest line on an outer peripheral surface of a cylindrical body which connects one point in one end of the cylindrical body to one point in the other end and is not parallel with an axis of the cylindrical body. The cylindrical body is interposed between an end of a hose and a hose band as a tightening means. When the hose band is tightened, both edges of the cut cylindrical body slide to deform the cylindrical body and an internal diameter of the cylindrical body can be reduced. Therefore, a clearance between the end of the hose and the hose band is not generated, so that the cylindrical body can be evenly tightened.

In other words, the inserting top end of the joint is inserted into the hose to be fastened with the hose band through the cylindrical body. The whole surface of the inserting top end is evenly fastened so that a wall of the hose is fastened from a circumference to a center direction by outer periphery surface of the inserting top end and an inner periphery surface of the cylindrical body. As an end face of the cylindrical body furthermore extends than the inserting top end of the joint, the hose in an outer periphery surface of the inserting top end of the joint does not expand and a retaining portion of a product being conveyed is not generated even if the hose has high temperature and high pressure.

Furthermore, the spacer of the present invention includes the shortest line on the outer peripheral surface of the cylindrical body which connects one point in one end of the cylindrical body to one point in the other end and is not parallel with the axis of the cylindrical body. The cylindrical body is cut along the shortest line to form a groove cut into the outer surface of the cylindrical body. Therefore a diameter of the spacer is reduced by fastening the outer peripheral surface and the wall of the hose is evenly pressed. As a result, an outer peripheral surface of the inserting top end and an inner peripheral surface of the hoes become adhered.

According to the present invention, it can provide a tightening structure of the hose joint and the hose joint with low cost used in the tightening structure. In the tightening structure, a clearance between the top end of the hose joint and the hose is not generated and more tightening is not necessary even if the hose expands. In the hose joint with low cost used in the tightening structure, the inside of the top end of the hose is not damaged.

## Claims

1. A spacer comprising a cylindrical body;
wherein the cylindrical body is cut along a shortest line on an outer periphery surface of the cylindrical body which connects a point on an end of the cylindrical body with a point on the other end of the cylindrical body and which is not parallel to an axis of the cylindrical body.

2. The spacer according to Claim 1, wherein the cylindrical body is cut along a spiral with a predetermined pitch angle which externally contacts with the outer periphery surface of the cylindrical body on at least an end of the cylindrical body.

3. The spacer according to Claim 1 or 2, wherein the spacer is made from a synthetic resin.

4. A spacer comprising a cylindrical body being cut in a direction except a radius direction;
wherein the cylindrical body with a reduced diameter is obtained when the cut cylindrical body is pressed into the radius direction.

5. The spacer according to Claim 4, wherein the cylindrical body with a reduced diameter is obtained by contacting both cut surfaces of the cut cylindrical body.

6. A spacer whose diameter can be reduced, comprising a cylindrical body which is provided with a groove extending in a fixed direction and which comprises two opposite end surfaces defined by the groove.

7. The spacer according to Claim 6, wherein a complete cylindrical body is formed when the two end surfaces are abutted.

8. The spacer according to Claim 3 or 7, wherein the groove extending in the fixed direction is a groove extending in an axis direction of the cylindrical body.

9. The spacer according to Claim 6 or 7, wherein the groove extending in the fixed direction is a groove extending in a non-parallel direction with respect to the axis direction of the cylindrical body.

10. The spacer according to Claim 6, 7, 8 or 9, wherein circumferential ribs are provided on at least both ends of the cylindrical body.

11. A structure for tightening a hose provided between the spacer according to Claim 1, 2, 3, 4, 5, 6, 7, 8, 9 or 10 and a hose joint comprising a straight pipe and being provided with a plurality of circumferential grooves on the straight pipe.

12. The tightening structure according to Claim 11,
wherein the outer periphery surface of the spacer is tightened by at least one hose band.

13. A hose joint provided with a flange on an end of the straight pipe and used for the tightening structure according to Claim 11 or 12 in which the plurality of circumferential grooves is spaced apart between an end and a free end of the straight pipe.

14. The hose joint according to Claim 13, wherein a transverse sectional shape of the groove is substantially semicircular.
